# EUROPÄISCHE PATENTSCHRIFT

(11) **EP 2 917 758 B1**
(45) Veröffentlichungstag und Bekanntmachung des Hinweises auf die Patenterteilung: **08.01.2020**
(21) Anmeldenummer: 13817643.3
(22) Anmeldetag: 06.11.2013
(51) Int. Cl.: G01S 13/86, H01Q 5/00

(54) **MESSGERÄT ZUR VERMESSUNG DER FLUGBAHN EINES ZIELOBJEKTS**
MEASURING APPARATUS FOR MEASURING THE TRAJECTORY OF A TARGET OBJECT
APPAREIL DE MESURE DE LA TRAJECTOIRE D'UN OBJET CIBLE

(30) Priorität: 09.11.2012 DE 102012022040
(43) Veröffentlichungstag der Anmeldung: 16.09.2015
(73) Patentinhaber: MBDA Deutschland GmbH, 86529 Schrobenhausen (DE)
(72) Erfinder: PROTZ, Rudolf, 85635 Höhenkirchen-Siegertsbrunn (DE)
(74) Vertreter: Isarpatent
(86) Internationale Anmeldenummer: PCT/DE2013/000651
(87) Internationale Veröffentlichungsnummer: WO 2014/071907

(56) Entgegenhaltungen:
- WO-A1-01/63694
- US-A- 4 866 454
- US-A- 5 214 438
- US-A- 5 307 077
- US-A1- 2004 119 020

## Beschreibung

### GEBIET DER ERFINDUNG

Die Erfindung betrifft ein Messgerät und ein Verfahren zur Vermessung der Flugbahn eines Zielobjekts.

### HINTERGRUND DER ERFINDUNG

Zur Vermessung der Flugbahn eines Zielobjekts, beispielsweise eines militärischen Flugkörpers, wie etwa einer Rakete oder eines Geschosses, können Radarsysteme verwendet werden, die eine Messung mit einer Genauigkeit im mrad-Bereich durchführen können. Solche Radargeräte werden üblicherweise in Verbindung mit C-RAM Systemen zur Überwachung und Vermessung der Flugbahnen von Artilleriegeschossen verwendet. Damit lässt sich eine Genauigkeit der Positionsbestimmung von einigen Metern erzielen.

Aus dem Dokument US 4 866 454 A ist eine Vorrichtung mit zwei Spiegeln bekannt, welche für Strahlung in Abhängigkeit ihrer Wellenlänge durchlässig oder reflektierend ausgeführt sind.

Unter Umständen ist es wünschenswert, die Bahndaten mit einer höheren Genauigkeit zu bestimmen. Die Kenntnis solch genauer Bahndaten ist zum Beispiel für den Einsatz von sog. C-RAM-Systemen erforderlich, die zur Abwehr von feindlichen Angriffen durch Artilleriegeschosse dienen.

### ZUSAMMENFASSUNG DER ERFINDUNG

Es ist Aufgabe der Erfindung, die Flugbahn eines Zielobjekts mit hoher Genauigkeit zu vermessen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein Messgerät zur Vermessung der Flugbahn eines Zielobjekts. Das Messgerät kann beispielsweise Teil eines C-RAM-Systems sein (counter rocket, artillery, mortar). Ein C-RAM-System kann als Effektor entweder Flugabwehrkanonen mit spezieller Munition, Flugkörper oder Hochenergie-Laserstrahlung verwenden. Das Ausrichten dieses Systems bzw. die dabei verwendeten Verfahren zur Feuerleitung erfordern in der Regel die genauen Kenntnisse der Zielkoordinaten des Zielobjekts.

Gemäß einer Ausführungsform der Erfindung umfasst das Messgerät eine Empfangseinrichtung mit einem Primärspiegel und einem Sekundärspiegel; einen ersten Detektor zum Erfassen von erster elektromagnetischer Strahlung einer ersten Wellenlänge; einen zweiten Detektor zum Erfassen von zweiter elektromagnetischer Strahlung einer zweiten Wellenlänge; wobei der Primärspiegel dazu ausgeführt ist, die erste elektromagnetische Strahlung und die zweite elektromagnetische Strahlung zu reflektieren und auf einen Brennbereich zu richten; wobei der Sekundärspiegel zwischen dem Primärspiegel und dem Brennbereich angeordnet ist und dazu ausgeführt ist, lediglich die zweite elektromagnetische Strahlung in Richtung des zweiten Detektors zu reflektieren; und wobei der erste Detektor hinter dem Sekundärspiegel im Brennbereich des Primärspiegels angeordnet ist.

Das Messgerät umfasst insbesondere einen Primärspiegel, der beide Arten elektromagnetischer Strahlung reflektieren kann. Auf diese Weise fasst das System zwei Messanordnungen zusammen, die mechanisch gekoppelt sind, um das Nachführen der Empfangseinrichtung zu vereinfachen und die Messgenauigkeit zu erhöhen. Mit der beschriebenen Anordnung und der weiter unten beschriebenen Messverfahren ist eine Bestimmung der Bahnkoordinaten von Artilleriegeschossen und anderer Zielobjekte mit einer Genauigkeit von wenigen Zentimetern möglich.

Der Brennbereich des Primärspiegels kann ein Bereich sein, in dem der Brennpunkt des Primärspiegels liegt oder ein Bereich, in den der Primärspiegel die (erste und zweite) elektromagnetische Strahlung bündelt. Im Allgemeinen kann ein Spiegel eine Vorrichtung sein, die dazu geeignet ist, die entsprechende elektromagnetische Strahlung nahezu vollständig (zumindest mehr als 50% oder mehr als 90%) zu reflektieren.

Gemäß einer Ausführungsform der Erfindung ist die erste elektromagnetische Strahlung Radarstrahlung. Die Empfangseinrichtung kann eine Empfangsantenne sein. Die Radarstrahlung kann eine Strahlung mit einer Wellenlänge im Zentimeterbereich sein.

Gemäß einer Ausführungsform der Erfindung weist die zweite elektromagnetische Strahlung eine Wellenlänge zwischen 0,5 µm und 1,5 µm auf. Die zweite elektromagnetische Strahlung kann Licht und/oder Laserstrahlung sein. Die zweite elektromagnetische Strahlung kann Infrarot-Licht, sichtbares Licht und/oder ultraviolettes Licht umfassen.

Die Empfangseinrichtung kann ein Teleskop für Licht bzw. Laserstrahlung umfassen, das mit dem Primärspiegel gleichzeitig Radarstrahlung bündeln kann.

Beispielsweise kann der Primärspiegel mit einer Schicht beschichtet sein, die sowohl Radarstrahlung als auch Laserstrahlung bzw. Licht reflektieren kann. Der Sekundärspiegel kann mit einer Schicht beschichtet sein, die lediglich Laserstrahlung bzw. Licht reflektiert, aber für Radarstrahlung durchlässig ist. Der Sekundärspiegel kann aus einem Material gefertigt sein, das für Radarstrahlen durchlässig ist, so dass diese auf den ersten Detektor treffen können.

Gemäß einer Ausführungsform der Erfindung ist der erste Detektor dazu ausgeführt, eine Position des Schwerpunkts der auf den ersten Detektor auftreffenden ersten elektromagnetischen Strahlung zu ermitteln. Auch kann der zweite Detektor dazu ausgeführt sein, eine Position des Schwerpunkts der auf den zweiten Detektor auftreffenden zweiten elektromagnetischen Strahlung zu ermitteln. Der erste Detektor und/oder der zweite Detektor können jeweils ein Vierquadranten-Detektor sein. Jeder oder einer der beiden der Detektoren können einen positionsempfindlichen Sensor umfassen.

Gemäß einer Ausführungsform der Erfindung ist der Primärspiegel ein parabolischer Spiegel (mit positiver Brennweite) und der Sekundärspiegel ein hyperbolischer Spiegel (mit negativer Brennweite). Der Primärspiegel kann eine parabolische Oberfläche aufweisen. Der Sekundärspiegel kann eine hyperbolische Oberfläche aufweisen. Beide Spiegel können eine übereinstimmende optische Achse aufweisen, die eine optische Achse der Empfangseinrichtung definieren kann.

Gemäß einer Ausführungsform der Erfindung weist der Primärspiegel eine Öffnung auf, durch die die zweite elektromagnetische Strahlung von dem Sekundärspiegel reflektiert wird. Die Öffnung kann in dem Bereich des Primärspiegels vorhanden sein, durch den die optische Achse der Spiegel den Primärspiegel durchdringt.

Gemäß einer Ausführungsform der Erfindung umfasst das Messgerät weiter eine Abstrahleinheit, die dazu ausgeführt ist, elektromagnetische Strahlung mit der zweiten Wellenlänge in Richtung einer optischen Achse der Empfangseinrichtung abzustrahlen. Auf diese Weise kann das Zielobjekt von dem Messgerät mit der zweiten elektromagnetischen Strahlung beleuchtet bzw. bestrahlt werden. Die Abstrahlvorrichtung kann eine Laserabstrahlvorrichtung zum Abstrahlen eines Laserstrahls mit der entsprechenden Wellenlänge sein.

Die Abstrahleinheit kann (starr) an der Empfangseinrichtung befestigt sein. Damit wird die Abstrahlvorrichtung zusammen mit der Empfangseinrichtung geschwenkt, wenn diese auf das Zielobjekt ausgerichtet wird.

Gemäß einer Ausführungsform der Erfindung ist das Messgerät dazu ausgeführt, eine Winkelabweichung der Empfangseinrichtung zum Zielobjekt mittels des ersten Detektors mit einer vorgegebenen Winkelgenauigkeit (beispielsweise 0,5 mrad) zu bestimmen.

Gemäß einer Ausführungsform der Erfindung ist die Abstrahlvorrichtung dazu ausgeführt, zweite elektromagnetische Strahlung in einem Winkelbereich abzustrahlen, der größer als die Winkelgenauigkeit ist (beispielsweise 1 mrad).

Gemäß einer Ausführungsform der Erfindung umfasst das Messgerät weiter einen halbdurchlässigen Spiegel, der dazu ausgeführt ist, die zweite elektromagnetische Strahlung in Richtung des zweiten Detektors zu reflektieren. Der halbdurchlässige Spiegel kann dazu ausgeführt sein, eine dritte elektromagnetische Strahlung durchzulassen. Nachdem die zweite elektromagnetische Strahlung (beispielsweise Licht und/oder Laserstrahlung) vom Sekundärspiegel reflektiert wurde (und eventuell durch die Öffnung im Primärspiegel gestrahlt wurde), kann die zweite elektromagnetische Strahlung durch den halbdurchlässigen Spiegel in Richtung des Detektors gelenkt werden. Andere Wellenlängenbereiche (die die dritte elektromagnetische Strahlung umfassen, beispielsweise Licht einer anderen Wellenlänge) können beispielsweise in Richtung einer Kamera durchgelassen werden.

Auch eine umgekehrte Anordnung, bei der die zweite elektromagnetische Strahlung von einem halbdurchlässigen Spiegel zum zweiten Detektor durchgelassen wird und wobei der halbdurchlässige Spiegel dazu ausgeführt ist, eine dritte elektromagnetische Strahlung zu reflektieren, ist möglich.

Gemäß einer Ausführungsform der Erfindung sind der Primärspiegel und der Sekundärspiegel starr miteinander verbunden und/oder sind zu einer beweglichen Empfangseinrichtung zusammengefasst, die auf das Zielobjekt gerichtet werden kann. Die Empfangseinrichtung kann damit für beide Arten von elektromagnetischen Strahlen auf das Zielobjekt ausgerichtet werden.

Gemäß einer Ausführungsform der Erfindung umfasst das Messgerät weiter eine Richteinheit mit Aktuatoren zum Ausrichten der Empfangseinrichtung auf das Zielobjekt.

Gemäß einer Ausführungsform der Erfindung umfasst die Richteinheit Winkeldetektoren zum Ermitteln der Winkelorientierung einer optischen Achse der Empfangseinrichtung. Aus den Signalen der Winkeldetektoren kann die Zielposition des Zielobjekts bestimmt werden, wenn die optische Achse der Empfangseinrichtung auf das Zielobjekt ausgerichtet ist.

Gemäß einer Ausführungsform der Erfindung umfasst das Messgerät weiter eine Steuerung zum Empfangen einer ersten Winkelabweichung der ersten elektromagnetischen Strahlung von dem ersten Detektor und einer zweiten Winkelabweichung der zweiten elektromagnetischen Strahlung von dem zweiten Detektor. Die Steuerung kann dazu ausgeführt sein, zu ermitteln, wie eine optische Achse der Empfangseinrichtung ausgerichtet werden muss, um die Winkelabweichungen der beiden Detektoren zu vermindern.

Ein weiterer Aspekt der Erfindung betrifft ein System zur Vermessung der Flugbahn eines Zielobjekts, das ein Messgerät, so wie es obenstehend und untenstehend beschrieben ist, und ein (separates) Radargerät zum Abstrahlen von Radarstrahlung als erste elektromagnetische Strahlung umfasst. Mit dem Radargerät kann auch eine erste grobe Zielposition zum ersten Ausrichten der Empfangseinrichtung ermittelt werden.

Ein weiterer Aspekt der Erfindung betrifft ein Verfahren zur Vermessung der Flugbahn eines Zielobjekts.

Gemäß einer Ausführungsform der Erfindung umfasst das Verfahren die Schritte von: Empfangen erster vom Zielobjekt reflektierter elektromagnetischer Strahlung in einer Empfangseinrichtung, die einen Primärspiegel und einen Sekundärspiegel umfasst; Reflektieren der ersten elektromagnetischen Strahlung mit dem Primärspiegel auf einen ersten Detektor; Bestimmen einer Grobposition des Zielobjekts mit einer ersten Genauigkeit aus den Signalen des ersten Detektors; Ausrichten der Empfangseinrichtung auf das Zielobjekt mittels der Grobposition; Empfangen zweiter vom Zielobjekt reflektierter elektromagnetischer Strahlung in der Empfangsantenne; Reflektieren der zweiten elektromagnetischen Strahlung mit dem Primärspiegel und dem Sekundärspiegel auf einen zweiten Detektor; Bestimmen einer Feinposition des Zielobjekts mit einer zweiten Genauigkeit, die größer als die erste Genauigkeit ist, aus den Signalen des zweiten Detektors.

Zur Vermessung der Zielkoordinaten des Zielobjekts wird dieses beispielsweise mit zeitlich gepulster elektromagnetischer Strahlung vom Boden aus bestrahlt. Dabei kann sowohl Strahlung mit Wellenlängen im Zentimeterbereich (Radarstrahlung) als auch mit Wellenlängen im Bereich von 0,5 bis 1,5 µm (Licht, Laserstrahlung) verwendet werden.

Die Erzeugung der ersten elektromagnetischen Strahlung kann mittels einem (separaten) Radargerät erfolgen. Die Erzeugung der zweiten elektromagnetischen Strahlung kann mittels einer (in das Messgerät integrierten) Lasereinheit erfolgen.

Die vom Zielobjekt zum Boden zurückgestreute erste und zweite elektromagnetische Strahlung kann von einer Empfangsantenne und ihr nachgeschalteten Detektoren bzw. Sensoren empfangen werden. Die Empfangsantenne kann dabei eine Teleskopanordnung mit einem Primärspiegel und einem Sekundärspiegel umfassen, bei der zumindest der Primärspiegel beide Arten elektromagnetischer Strahlung (d.h. die erste und die zweite elektromagnetische Strahlung) reflektieren und bündeln kann.

Die beiden Detektoren können jeweils die erste elektromagnetische Strahlung bzw. die zweite elektromagnetische Strahlung detektieren und jeweils eine Positionsabweichung bzw. Winkelabweichung des Ziels zu dem jeweiligen Detektor bestimmen und daraus entsprechende Signale erzeugen.

Mittels der in einer Steuerung bzw. Elektronik ausgewerteten Empfangssignale wird die Empfangsantenne in Azimut- und Elevationswinkel während der Messung fortwährend so auf das Ziel ausgerichtet, dass immer optimaler Empfang besteht. Dies kann beispielsweise durch (lediglich) die Signale des ersten Detektors erfolgen.

Die Winkelkoordinaten des Zielobjekts können dabei mit an den Drehachsen einer Richteinheit für die Empfangseinrichtung angebrachten Winkelmessgebern bzw. Winkeldetektoren bestimmt werden.

Die Entfernungsbestimmung zum Zielobjekt kann durch Laufzeitmessung der gesendeten und empfangenen gepulsten elektromagnetischen Strahlung, beispielsweise der zweiten elektromagnetischen Strahlung, erfolgen. Die Bestimmung der Zielentfernung kann also über die Laufzeitmessung der Pulse eines Beleuchtungslasers (als Lasereinheit) erfolgen.

Die Vermessung der Flugbahn des Zielobjekts, beispielsweise eines RAM-Zieles (RAM: rocket (Rakete), artillery (Artilleriegeschoss), mortar (Mörsergranate)), kann unabhängig von einer Eigensignatur des Zielobjekts (d.h. dessen detaillierter Abstrahlcharakteristik) erfolgen.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt eine schematische Ansicht eines Systems zur Vermessung der Flugbahn eines Zielobjekts gemäß einer Ausführungsform der Erfindung.
Fig. 2 zeigt eine schematische Ansicht eines Messgeräts zur Vermessung der Flugbahn eines Zielobjekts gemäß einer Ausführungsform der Erfindung.
Fig. 3 zeigt ein Flussdiagramm für ein Verfahren zur Vermessung der Flugbahn eines Zielobjekts gemäß einer Ausführungsform der Erfindung.

Grundsätzlich sind identische oder ähnliche Teile mit den gleichen Bezugszeichen versehen.

### DETAILLIERTE BESCHREIBUNG VON AUSFÜHRUNGSBEISPIELEN

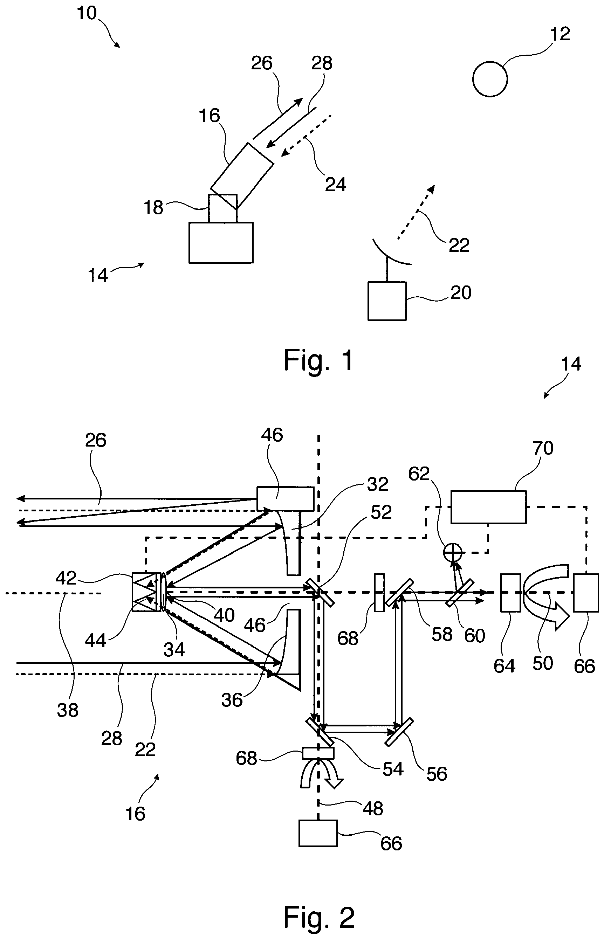

Die Fig. 1 zeigt ein System 10 zur Vermessung der Flugbahn eines Zielobjekts 12, das ein Messgerät 14 mit einer Empfangsantenne 16 und einer Richteinheit 18 umfasst. Die Richteinheit 18 kann die Empfangsantenne 16 auf das Zielobjekt 12 ausrichten. Das Zielobjekt 12 kann beispielsweise ein Flugkörper, eine Rakete oder ein Artilleriegeschoss sein.

Weiter umfasst das System ein Radargerät 20, das Radarstrahlung 22 auf das Zielobjekt 12 strahlen kann, die eine elektromagnetische Strahlung im Zentimeter-Wellenlängenbereich sein kann.

Das Messgerät 14 kann vom Zielobjekt 12 reflektierte Radarstrahlung 24 erfassen und zusätzlich Laserstrahlung 26 auf das Zielobjekt 12 strahlen sowie vom Zielobjekt 10 reflektierte Laserstrahlung 28 erfassen.

Das Messgerät 12 bzw. die Messanordnung 12 ist in der Fig. 12 detaillierter dargestellt.

Das Messgerät 12 umfasst die bewegliche Antenne 16, die einen Teleskopaufbau, gebildet aus einem Primärspiegel 32 und einem Sekundärspiegel 34, umfasst, die von einer gemeinsamen mechanischen Struktur gehalten werden bzw. starr miteinander verbunden sind.

Der Primärspiegel 32 besteht im Wesentlichen aus Glaskeramik und besitzt einen Durchmesser von typischerweise einem Meter. Der Primärspiegel weist eine spiegelnde Oberfläche 36 in der Form eines Paraboloids mit einer Brennweite von typischerweise zwei Metern auf. Die Oberfläche 36 ist mit einer metallischen Reflexionsschicht versehen, welche sowohl die empfangene Radarstrahlung 22 als auch die Laserstrahlung 28 beispielsweise zu 95% reflektiert.

Vom Primärspiegel 32 wird die vom Zielobjekt 12 empfangene Strahlung 24, 28 auf den Sekundärspiegel 34 gebündelt, welcher in ca. 2 Meter Abstand vor dem Primärspiegel 32 angebracht sein kann, beispielsweise kurz vor dem Brennpunkt des Primärspiegels 32. Die optischen Achsen 38 der beiden Spiegel 32, 34 können sich dabei überdecken und eine optische Achse 38 der Empfangsantenne 16 bilden.

Auch der Sekundärspiegel 34 besteht im Wesentlichen aus Glaskeramik und kann eine Oberfläche 40 in Form eines Hyperboloids aufweisen. Die Oberfläche 40 ist mit einer dielektrischen Beschichtung versehen, welche für die Laserstrahlung 28 im Wellenlängenbereich der verwendeten Laserstrahlung hochreflektierend ist, für die verwendete Radarstrahlung 24 hingegen hochdurchlässig ist. Die für den Sekundärspiegel 34 verwendete Glaskeramik ist ebenfalls für die Radarstrahlung 24 hochdurchlässig.

Auf der Rückseite des Sekundärspiegels 34 ist ein erster Detektor 42 angebracht, der in einer Quadranten-Anordnung vier Empfangseinrichtungen 44 zur Messung der empfangenen Radarstrahlung 22 umfasst.

An der Empfangsantenne 16 ist eine Lasereinheit (bzw. ein Beleuchtungslaser) 46 angebracht, der das Zielobjekt 12 mit Laserstrahlung 26 bestrahlt, wenn die optische Achse 38 der Empfangsantenne 16 im Wesentlichen auf das Ziel ausgerichtet ist.

Die vom Zielobjekt 12 zurückgestreute Laserstrahlung 28 wird mittels der Empfangsantenne 16 empfangen, von dem Primärspiegel 32 auf den Sekundärspiegel 34 reflektiert und vom Sekundärspiegel 34 als gebündelter Strahl durch eine zentrisch (bezüglich der Achse 38) im Primärspiegel 32 angebrachte Bohrung bzw. Öffnung 46 über die in den zwei Rotationsachsen 48, 50 der Richteinheit 18 angebrachten Umlenkspiegel 52, 54, 56, 58 und 60 auf einen positionsempfindlichen Detektor 62 gelenkt und dort fokussiert.

Der Umlenkspiegel 60 kann als wellenlängenselektiver Spiegel ausgebildet sein, so dass über diesen empfangenes Licht mit anderen Wellenlängen als der Laserwellenlänge des Beleuchtungslasers 46 zum Beispiel für Beobachtungszwecke mittels einer Kamera 64 genutzt werden kann und/oder Laserstrahlung mit anderen Wellenlängen als der Laserwellenlänge des Beleuchtungslasers 46 auf das Zielobjekt 12 zu dessen Bekämpfung abgestrahlt werden kann.

Die Richteinheit 18 umfasst zwei Aktuatoren 66 (beispielsweise Elektromotoren), mit denen die Empfangsantenne 16 um die beiden Rotationsachsen 48, 50 bewegt werden kann. Weiter umfasst das Messgerät 14 zwei Winkeldetektoren 68, die an den beiden Rotationsachsen der Richteinheit 18 der Empfangsantenne 16 angebracht sind, mit denen die Winkelausrichtung der Empfangsantenne 16 bestimmt werden kann.

Die Ansteuerung der Aktuatoren 66 erfolgt durch eine Steuerung 70 bzw. Elektronik 70, die auch die Signale der Winkeldetektoren 68 empfängt und verarbeitet. Die Steuerung 70 kann auch mit dem Radargerät 20 in Verbindung stehen und mit diesem Informationen austauschen.

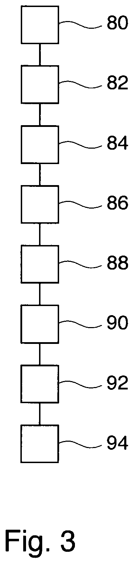

Die Fig. 3 zeigt ein Flussdiagramm für ein Verfahren zur Vermessung der Flugbahn des Zielobjekts 12.

Im Schritt 80 wird die Radarstrahlung 22 mittels des von dem Messgerät 14 getrennten Radargeräts 20 erzeugt. Das Radargerät ermittelt eine erste Zielposition bzw. Zielkoordinaten des Zielobjekts 12 bis auf wenige Meter genau und übermittelt diese an das Messgerät 14 bzw. dessen Steuerung 70.

Im Schritt 82 wird die Empfangsantenne 16 des Messgeräts 14 mittels der zweiachsigen Richteinheit 18 auf die vom externen Radargerät 20 übermittelten Zielkoordinaten ausgerichtet. Dazu steuert die Steuerung 70 die Aktuatoren 66 entsprechend an. Die aktuelle Ausrichtung der Empfangsantenne 16 kann aus den Signalen der Winkeldetektoren 68 ermittelt werden.

Im Schritt 84 wird die vom Zielobjekt 12 in Richtung des Messgeräts 14 reflektierte Radarstrahlung von der Empfangsantenne 16 empfangen und vom Primärspiegel 32 auf den ersten Detektor 42 gebündelt. Aus den Sensorsignalen des Detektors 32 wird von der Steuerung 70 die Winkelabweichung der Empfangsantenne 16 vom Zielobjekt 12 mit einer ersten Genauigkeit von ca. 0,5 mrad ermittelt. Die kann beispielsweise mittels differentieller Phasenmessungen erfolgen.

Im Schritt 86 wird die Empfangsantenne 16 dann mittels der Richteinheit 18, die von der Steuerung angesteuert wird, dem Zielobjekt 12 entsprechend nachgeführt.

Im Schritt 88, nach der Ausrichtung im Schritt 86, wird das Zielobjekt 12 mittels der Lasereinheit 46 mit Laserstrahlung 26 bestrahlt, beispielsweise mit gepulster Laserstrahlung 26, welche im Wellenlängenbereich von 0,5 bis 1,5 µm liegen kann. Die Pulslängen der Laserpulse betragen typischerweise wenige Nanosekunden, die Pulswiederholrate kann einige hundert bis eintausend Pulse pro Sekunde und/oder die Pulsenergien einige zehn mJ betragen. Die Divergenz der ausgesandten Laserstrahlung 26 beträgt typischerweise 1 mrad.

Im Schritt 90 wird die vom Zielobjekt 12 in Richtung des Messgeräts 14 reflektierte Laserstrahlung 28 von der Empfangsantenne 16 empfangen und vom Primärspiegel 32, vom Primärspiegel 34 und den nachfolgenden Umlenkspiegeln 52, 54, 56, 58, 60 auf den zweiten Detektor 62 gebündelt und umgelenkt. Die vom zweiten Detektor 62, beispielsweise einem positionsempfindlichen Sensor 62, empfangenen Signale werden von der Steuerung 70 ausgewertet. Daraus bestimmt die Steuerung 70 die Winkelablagen bzw. Winkelabweichungen der Empfangsantenne 16 bis auf wenige µrad genau.

Im Schritt 92 erfolgt eine genaue Positionsbestimmung des Zielobjekts 12 durch die Steuerung 70 aus den Signalen der Winkeldetektoren bzw. Winkelmessgeber 68 und den im Schritt 90 ermittelten Winkelabweichungen. Aus diesen Daten lässt sich die Winkelposition des Zielobjekts 12 mit einer Genauigkeit von wenigen Mikroradian bestimmen.

Im Schritt 94 wird die Entfernung des Zielobjekts 12 von der Steuerung bestimmt. Dies kann über eine Laufzeitmessung der Laserpulse der Laserstrahlung 26, 28 geschehen.

Die Schritte 82 bis 94 können regelmäßig wiederholt werden, um so die Flugbahn des Zielobjekts 12 zu vermessen bzw. zu bestimmen. Die zeitliche Auflösung der Messung kann sich aus der Pulswiederholrate des Beleuchtungslasers 46 ergeben.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. System (10) zur Vermessung der Flugbahn eines Zielobjekts (12), das System umfassend:
ein Messgerät (14) zur Vermessung der Flugbahn eines Zielobjekts (12); und
ein von dem Messgerät separiertes Radargerät (20) zum Abstrahlen von Radarstrahlung (22) als erste elektromagnetische Strahlung einer ersten Wellenlänge,
wobei das Messgerät (14) umfasst:
eine Empfangseinrichtung (16) mit einem Primärspiegel (32) und einem Sekundärspiegel (34);
einen ersten Detektor (42) zum Erfassen der ersten elektromagnetischen Strahlung (24);
einen zweiten Detektor (62) zum Erfassen von zweiter elektromagnetischer Strahlung (28) einer zweiten Wellenlänge;
eine Abstrahleinheit (46), die dazu ausgeführt ist, elektromagnetische Strahlung (26) mit der zweiten Wellenlänge in Richtung einer optischen Achse (38) der Empfangseinrichtung (16) abzustrahlen;
wobei die Abstrahleinheit (46) eine Lasereinheit ist und an der Empfangseinrichtung (16) befestigt ist;
wobei der Primärspiegel (32) dazu ausgeführt ist, die erste elektromagnetische Strahlung (24) und die zweite elektromagnetische Strahlung (28) zu reflektieren und auf einen Brennbereich zu richten;
wobei der Sekundärspiegel (34) zwischen dem Primärspiegel (32) und dem Brennbereich angeordnet ist und dazu ausgeführt ist, lediglich die zweite elektromagnetische Strahlung (28) in Richtung des zweiten Detektors (62) zu reflektieren;
wobei der erste Detektor (42) hinter dem Sekundärspiegel (34) im Brennbereich des Primärspiegels (32) angeordnet ist.

2. System (10) nach Anspruch 1,
wobei die zweite elektromagnetische Strahlung (28) eine Wellenlänge zwischen 0,5 µm und 1,5 µm aufweist.

3. System (10) nach einem der vorhergehenden Ansprüche,
wobei der erste Detektor (42) dazu ausgeführt ist, eine Position des Schwerpunkts der auf den ersten Detektor (42) auftreffenden ersten elektromagnetischen Strahlung (24) zu ermitteln und/oder
wobei der zweite Detektor (62) dazu ausgeführt ist, eine Position des Schwerpunkts der auf den zweiten Detektor (62) auftreffenden zweiten elektromagnetischen Strahlung (28) zu ermitteln.

4. System (10) nach einem der vorhergehenden Ansprüche,
wobei der Primärspiegel (32) ein parabolischer Spiegel und der Sekundärspiegel (34) ein hyperbolischer Spiegel ist.

5. System (10) nach einem der vorhergehenden Ansprüche,
wobei der Primärspiegel (32) eine Öffnung (46) aufweist, durch die die zweite elektromagnetische Strahlung (28) von dem Sekundärspiegel (34) reflektiert wird.

6. System (10) nach einem der vorhergehenden Ansprüche,
wobei das Messgerät (14) dazu ausgeführt ist, eine Winkelabweichung der Empfangseinrichtung (16) zum Zielobjekt (12) mittels des ersten Detektors (42) mit einer vorgegebenen Winkelgenauigkeit zu bestimmen;
wobei die Abstrahlvorrichtung (46) dazu ausgeführt ist, zweite elektromagnetische Strahlung (26) in einem Winkelbereich abzustrahlen, der größer als die Winkelgenauigkeit ist.

7. System (10) nach einem der vorhergehenden Ansprüche, weiter umfassend:
einen halbdurchlässigen Spiegel (60), der dazu ausgeführt ist, die zweite elektromagnetische Strahlung (28) in Richtung des zweiten Detektors (62) zu reflektieren; und/oder
wobei der halbdurchlässige Spiegel (60) dazu ausgeführt ist, eine dritte elektromagnetische Strahlung durchzulassen.

8. System (10) nach einem der vorhergehenden Ansprüche,
wobei der Primärspiegel (32) und der Sekundärspiegel (34) starr miteinander verbunden sind und zu einer beweglichen Empfangseinrichtung (16) zusammengefasst sind, die auf das Zielobjekt (12) gerichtet werden kann.

9. System (10) nach einem der vorhergehenden Ansprüche, weiter umfassend:
eine Richteinheit (18) mit Aktuatoren (66) zum Ausrichten der Empfangseinrichtung (16) auf das Zielobjekt (12).

10. System (10) nach Anspruch 9,
wobei die Richteinheit (18) Winkeldetektoren (68) zum Ermitteln der Winkelorientierung einer optischen Achse (38) der Empfangseinrichtung (16) umfasst.

11. System (10) nach einem der vorhergehenden Ansprüche, weiter umfassend:
eine Steuerung (70) zum Empfangen einer ersten Winkelabweichung der ersten elektromagnetischen Strahlung (24) von dem ersten Detektor (42) und einer zweiten Winkelabweichung der zweiten elektromagnetischen Strahlung (28) von dem zweiten Detektor (62);
wobei die Steuerung (70) dazu ausgeführt ist, zu ermitteln, wie eine optische Achse (38) der Empfangseinrichtung (16) ausgerichtet werden muss, um die Winkelabweichungen der beiden Detektoren (42, 62) zu vermindern.

## Claims

1. System (10) for measuring the trajectory of a target object (12), comprising:
a measuring apparatus (14) for measuring the trajectory of a target object (12); and
a radar device (20) separate from the measuring apparatus for radiating radar radiation (22) as first electromagnetic radiation of a first wavelength,
wherein the measuring apparatus (14) comprises:
a receiving device (16) with a primary mirror (32) and a secondary mirror (34);
a first detector (42) for detecting the first electromagnetic radiation (24);
a second detector (62) for detecting second electromagnetic radiation (28) of a second wavelength;
a radiation unit (46) which is designed to radiate electromagnetic radiation (26) with the second wavelength in the direction of an optical axis (38) of the receiving device (16);
wherein the radiation unit (46) is a laser unit and is fixed to the receiving device (16);
wherein the primary mirror (32) is designed to reflect the first electromagnetic radiation (24) and the second electromagnetic radiation (28) and to direct said radiation on to a focal region;
wherein the secondary mirror (34) is arranged between the primary mirror (32) and the focal region and is designed to reflect only the second electromagnetic radiation (28) in the direction of the second detector (62);
wherein the first detector (42) is arranged behind the secondary mirror (34) in the focal region of the primary mirror (32).

2. System (10) according to claim 1,
wherein the second electromagnetic radiation (28) has a wavelength between 0.5 µm and 1.5 µm.

3. System (10) according to any one of the preceding claims,
wherein the first detector (42) is designed to detect a position of the centre of gravity of the first electromagnetic radiation (24) impinging on the first detector (42) and/or
wherein the second detector (62) is designed to detect a position of the centre of gravity of the second electromagnetic radiation (28) impinging on the second detector (62).

4. System (10) according to any one of the preceding claims,
wherein the primary mirror (32) is a parabolic mirror and the secondary mirror (34) is a hyperbolic mirror.

5. System (10) according to any one of the preceding claims,
wherein the primary mirror (32) has an aperture (46) through which the second electromagnetic radiation (28) is reflected by means of the secondary mirror (34).

6. System (10) according to any one of the preceding claims,
wherein the measuring apparatus (14) is designed to determine with a prescribed angular accuracy an angular deviation of the receiving device (16) from the target object (12) by means of the first detector (42);
wherein the radiation unit (46) is designed to radiate second electromagnetic radiation (26) in an angular range that is greater than the angular accuracy.

7. System (10) according to any one of the preceding claims, additionally comprising:
a semi-permeable mirror (60), which is designed to reflect the second electromagnetic radiation (28) in the direction of the second detector (62); and/or
wherein the semi-permeable mirror (60) is designed to let a third electromagnetic radiation pass through.

8. System (10) according to any one of the preceding claims,
wherein the primary mirror (32) and the secondary mirror (34) are rigidly connected to one another and are combined to form a movable receiving device (16) which can be directed at the target object (12).

9. System (10) according to any one of the preceding claims, additionally comprising:
a directing unit (18) with actuators (66) for directing the receiving device (16) at the target object (12).

10. System (10) according to claim 9,
wherein the directing unit (18) comprises angle detectors (68) for detecting the angular orientation of an optical axis (38) of the receiving device (16).

11. System (10) according to any one of the preceding claims, additionally comprising:
a controller (70) for receiving a first angular deviation of the first electromagnetic radiation (24) from the first detector (42) and a second angular deviation of the second electromagnetic radiation (28) from the second detector (62);
wherein the controller (70) is designed to determine how an optical axis (38) of the receiving device (16) has to be oriented in order to reduce the angular deviations of the two detectors (42, 62).

## Revendications

1. Système (10) de mesure de la trajectoire d'un objet cible (12), le système comprenant :
un appareil de mesure (14) destiné à mesurer la trajectoire d'un objet cible (12) ; et
un appareil radar (20) séparé de l'appareil de mesure et destiné à émettre un rayonnement radar (22) sous la forme d'un premier rayonnement électromagnétique ayant une première longueur d'onde,
l'appareil de mesure (14) comprenant :
un moyen de réception (16) doté d'un miroir principal (32) et d'un miroir secondaire (34) ;
un premier détecteur (42) destiné à détecter le premier rayonnement électromagnétique (24) ;
un second détecteur (62) destiné à détecter un second rayonnement électromagnétique (28) ayant une seconde longueur d'onde ;
une unité d'émission (46), qui est conçue pour émettre un rayonnement électromagnétique (26) avec la seconde longueur d'onde en direction d'un axe optique (38) du moyen de réception (16) ;
l'unité d'émission (46) étant une unité laser et étant fixée au moyen de réception (16) ;
le miroir principal (32) étant conçu pour réfléchir le premier rayonnement électromagnétique (24) et le second rayonnement électromagnétique (28) et les orienter sur une zone focale ;
le miroir secondaire (34) étant disposé entre le miroir principal (32) et la zone focale et étant conçu pour réfléchir uniquement le second rayonnement électromagnétique (28) en direction du second détecteur (62) ;
le premier détecteur (42) étant disposé derrière le miroir secondaire (34) dans la zone focale du miroir principal (32) .

2. Système (10) selon la revendication 1,
dans lequel le second rayonnement électromagnétique (28) présente une longueur d'onde comprise entre 0,5 µm et 1,5 µm.

3. Système (10) selon l'une des revendications précédentes,
dans lequel le premier détecteur (42) est conçu pour déterminer une position du centroïde du premier rayonnement électromagnétique (24) tombant sur le premier détecteur (42) et/ou
dans lequel le second détecteur (62) est conçu pour déterminer une position du centroïde du second rayonnement électromagnétique (28) tombant sur le second détecteur (62).

4. Système (10) selon l'une des revendications précédentes,
dans lequel le miroir principal (32) est un miroir parabolique et le miroir secondaire (34) est un miroir hyperbolique.

5. Système (10) selon l'une des revendications précédentes,
dans lequel le miroir principal (32) comporte une ouverture (46), à travers laquelle le second rayonnement électromagnétique (28) est réfléchi par le miroir secondaire (34) .

6. Système (10) selon l'une des revendications précédentes,
dans lequel l'appareil de mesure (14) est conçu pour déterminer un écart angulaire du moyen de réception (16) par rapport à l'objet cible (12) au moyen du premier détecteur (42) avec une précision angulaire prédéfinie ;
dans lequel le dispositif d'émission (46) est conçu pour émettre un second rayonnement électromagnétique (26) dans une plage angulaire qui est supérieure à la précision angulaire.

7. Système (10) selon l'une des revendications précédentes, comprenant en outre :
un miroir semi-réfléchissant (60), qui est conçu pour réfléchir le second rayonnement électromagnétique (28) en direction du second détecteur (62) ; et/ou
dans lequel le miroir semi-réfléchissant (60) est conçu pour laisser passer un troisième rayonnement électromagnétique.

8. Système (10) selon l'une des revendications précédentes,
dans lequel le miroir principal (32) et le miroir secondaire (34) sont reliés l'un à l'autre de manière rigide et sont réunis pour former un moyen de réception (16) mobile, qui peut être orienté sur l'objet cible (12).

9. Système (10) selon l'une des revendications précédentes, comprenant en outre :
une unité d'orientation (18) dotée d'actionneurs (66) destinées à orienter le moyen de réception (16) sur l'objet cible (12).

10. Système (10) selon la revendication 9,
dans lequel l'unité d'orientation (18) comprend des détecteurs d'angle (68) destinés à déterminer l'orientation angulaire d'un axe optique (38) du moyen de réception (16).

11. Système (10) selon l'une des revendications précédentes, comprenant en outre :
un dispositif de commande (70) destiné à recevoir un premier écart angulaire du premier rayonnement électromagnétique (24) provenant du premier détecteur (42) et un second écart angulaire du second rayonnement électromagnétique (28) provenant du second détecteur (62) ;
le dispositif de commande (70) étant conçu pour déterminer comment un axe optique (38) du moyen de réception (16) doit être orienté pour diminuer l'écart angulaire des deux détecteurs (42, 62).
